# EUROPÄISCHE PATENTANMELDUNG

(11) **EP 4 372 505 A1**
(43) Veröffentlichungstag der Anmeldung: **22.05.2024**
(21) Anmeldenummer: 23205825.5
(22) Anmeldetag: 25.10.2023
(51) Int. Cl.: G05B 19/418, H02P 6/16, H02P 29/00, G05B 19/042, H04L 12/00, H04L 27/26

(54) **ANTRIEBSSYSTEM**

(30) Priorität: 07.11.2022 DE 102022129351
(71) Anmelder: SICK AG, 79183 Waldkirch (DE); WITTENSTEIN SE, 97999 Igersheim (DE); Baumüller Nürnberg GmbH, 90482 Nürnberg (DE)
(72) Erfinder: PIRLING, Johannes, 90482 Nürnberg (DE); WOROFKA, Nicolas, 90482 Nürnberg (DE); MECKEL, Oliver, 97999 Igersheim (DE); Süß, Sebastian, 79183 Waldkirch (DE)
(74) Vertreter: Manitz Finsterwald Patent- und Rechtsanwaltspartnerschaft mbB

(57) **Zusammenfassung**

Ein Antriebssystem umfasst eine Motoreinheit, die ein Erfassungsmodul und ein Übertragungsmodul aufweist, einen Sensor und eine Motorsteuerung. Das Erfassungsmodul ist ausgebildet, Sensordaten des Sensors an einer Erfassungsschnittstelle zu empfangen, diese Sensordaten für das Übertragungsmodul umzusetzen und über eine Ausgangsschnittstelle leitungsgebunden an das Übertragungsmodul zu übertragen. Das Übertragungsmodul ist ausgebildet, die umgesetzten Sensordaten an einer Eingangsschnittstelle von dem Erfassungsmodul zu empfangen, die umgesetzten Sensordaten mit in der Motoreinheit ermittelten Motordaten zu fusionieren und schließlich die fusionierten Daten über eine Leitung an die Motorsteuerung zu senden. Die Motorsteuerung ist ausgebildet, die Daten des Sensors aus den fusionierten Daten zu extrahieren und auszugeben.

## Beschreibung

Die Erfindung betrifft ein Antriebssystem mit einer Motoreinheit, einem Sensor und einer Motorsteuerung.

Im Bereich der mechatronischen Antriebstechnik kann es notwendig sein, Produkte und Komponenten mit zusätzlichen Sensoren zu versehen. Dies erfordert meist einen zusätzlichen Verdrahtungsaufwand, der mit Kosten verbunden ist. Ferner ist weiterer Aufwand damit verbunden, eine effiziente und sinnvolle Struktur der Konnektivität für die erforderliche Datenübertragung der zusätzlichen Sensoren bereitzustellen, beispielsweise bei der Einbindung der Produkte und Komponenten im "Industrial Internet of Things" (IIoT).

Für zusätzliche Sensoren ist üblicherweise ein jeweiliger gesonderter Anschluss an eine bestehende Bus-Infrastruktur vorgesehen. Beispielsweise wird ein zusätzlicher Sensor eines Servogetriebes zur Übertragung erfasster Beschleunigungsdaten des Servogetriebes an eine offengelegte IO-Link-Übertragungsschnittstelle angeschlossen, und die datentechnische Kommunikation mit dem Sensor wird über ein weiteres Modul, den IO-Link-Master, durchgeführt. Es findet üblicherweise keine Kommunikation zwischen dem zusätzlichen Sensor am Servogetriebe und einem Servomotor statt, mit dem das Servogetriebe verbunden ist.

Aus der DE 10 2018 107 150 A1 ist zwar ein System bekannt, bei dem eine datentechnische Kommunikation zwischen einem Getriebe und einem Motor erfolgt, diese Kommunikation nutzt jedoch stets eine drahtlose Datenübertragung im Getriebe sowie zwischen Motor und Getriebe. Solche drahtlosen Übertragungstechniken sind jedoch störungsanfälliger als drahtgebundene Lösungen, sodass die Zuverlässigkeit solcher Systeme eingeschränkt ist.

Um eine Zustandsüberwachung (condition-monitoring) von Systemen wie beispielsweise Kombinationen aus Motor und Getriebe durchzuführen, ist derzeit, wie vorstehend erwähnt, meistens eine parallele Struktur zur Datenübertragung erforderlich, da beispielsweise primäre Bewegungsfunktionen und deren Überwachung z. B. mittels eines Motorfeedbacksensors unabhängig von weiteren Funktionen des Getriebes und deren Überwachung, beispielsweise mittels eines Schwingungssensors, realisiert sind. Dies erschwert die synchronisierte Zusammenführung von Daten und deren effiziente Nutzung zur Zustandsüberwachung. Daher ist die Zustandsüberwachung ebenfalls mit einem erhöhten Aufwand verbunden.

Eine Aufgabe der Erfindung besteht darin, ein Antriebssystem zu schaffen, bei dem Daten einer zusätzlichen Einrichtung auf effiziente und zuverlässige Weise erfasst und ausgewertet werden können. Eine weitere Aufgabe der Erfindung besteht darin, eine entsprechende zusätzliche Einrichtung zu schaffen, die sich mit geringem Aufwand in ein Antriebssystem einbinden lässt.

Diese Aufgaben werden durch ein Antriebssystem und ein Maschinenelement mit den Merkmalen der jeweiligen unabhängigen Ansprüche gelöst. Vorteilhafte Weiterbildungen der Erfindung sind in den Unteransprüchen, der Beschreibung und den Zeichnungen angegeben.

Gemäß einem ersten Aspekt umfasst das Antriebssystem eine Motoreinheit, die ein Erfassungsmodul und ein Übertragungsmodul aufweist, einen Sensor und eine Motorsteuerung. Das Erfassungsmodul ist ausgebildet, Sensordaten des Sensors an einer Erfassungsschnittstelle zu empfangen, diese Sensordaten für das Übertragungsmodul umzusetzen und über eine Ausgangsschnittstelle leitungsgebunden an das Übertragungsmodul zu übertragen. Das Übertragungsmodul ist ausgebildet, die umgesetzten Sensordaten an einer Eingangsschnittstelle von dem Erfassungsmodul zu empfangen, die umgesetzten Sensordaten mit in der Motoreinheit ermittelten Motordaten zu fusionieren und schließlich die fusionierten Daten über eine Leitung an die Motorsteuerung zu senden. Die Motorsteuerung ist ausgebildet, die Daten des Sensors aus den fusionierten Daten zu extrahieren und auszugeben.

Die Motoreinheit und die Motorsteuerung können gemeinsam den "normalen" Betrieb des Antriebssystems ermöglichen, d.h. die primäre Bewegungsfunktionalität des Antriebssystems. Die Motoreinheit ist beispielsweise ein Servomotor. In diesem Fall werden solche Motordaten an die Motorsteuerung übertragen, die z.B. eine Drehposition und/oder eine Drehgeschwindigkeit des Servomotors umfassen.

Die Leitung, über welche die fusionierten Daten übertragen werden und die zwischen dem Übertragungsmodul der Motoreinheit und der Motorsteuerung verläuft, kann beispielsweise als HDSL-Leitung ausgebildet sein. Der Begriff HDSL steht im vorliegenden Zusammenhang für "HIPERFACE DSL", und die HDSL-Leitung bezeichnet insbesondere eine DSL-artige Leitung des HIPERFACE-Systems der Sick AG. Die HDSL-Leitung ist also ein Eigenname, der auf einer DSL-ähnlichen Übertragungstechnik mit einer Vielzahl von Trägerfrequenzen beruht. Eine DSL-Leitung (digital subscriber line) ist beispielsweise ebenso ausgebildet, Daten unter Verwendung einer Vielzahl von Trägerfrequenzen zu übertragen.

Das Umsetzen der jeweiligen Daten bedeutet im vorliegenden Zusammenhang eine Veränderung des Datenformats und/oder der physikalischen Art der Übertragung der Daten, beispielsweise eine Umsetzung von I²C (von engl.: inter-integrated circuit) auf UART (von engl.: universal asynchroneous receiver transmitter) bzw. von UART auf HDSL. Es versteht sich, dass auch andere Übertragungsformate gewählt werden können, beispielsweise SPI (Serial Peripheral Interface), CAN-Bus (Controller Area Network) und dergleichen.

Das Erfassungsmodul kann auch als Sensorhub bezeichnet werden, da es sowohl die Motordaten eines Motorsensors als auch die Sensordaten des beispielsweise extern installierten Sensors erfassen kann. Das Vorhandensein des Erfassungsmoduls kann mit dem Vorteil verbunden sein, dass beliebige Sensoren an dieses angeschlossen werden können, wobei das Erfassungsmodul die Messdaten der Sensoren bzw. die Sensordaten im konkreten Fall passend für das Übertragungsmodul umsetzen kann, damit die Sensordaten anschließend von dem Übertragungsmodul an die Motorsteuerung übertragen werden können.

Das Erfassungsmodul und das Übertragungsmodul können innerhalb eines Gehäuses der Motoreinheit angeordnet sein. Ferner kann das Erfassungsmodul ausgebildet sein, Daten aktiv von dem Sensor abzurufen. Zu diesem Zweck kann das Erfassungsmodul ein entsprechendes Signal an den Sensor senden, das den Sensor auffordern kann, gewünschte Daten an das Erfassungsmodul zu senden. Nach der Aufforderung zum Senden der gewünschten Daten kann eine unidirektionale Kommunikation zwischen dem Sensor und dem Erfassungsmodul bestehen, um die gewünschten Daten zu übertragen.

Zusätzlich oder alternativ zu dem Sensor kann auch ein weiteres Gerät, beispielsweise ein Feldgerät, mit dem Erfassungsmodul der Motoreinheit kommunikativ verbunden sein. Das weitere Gerät kann beispielsweise ein Aktor oder eine untergeordnete Steuerung sein. Die Sensordaten können in diesem Fall Daten des Aktors oder der Steuerung umfassen und transportieren.

Das Fusionieren der Motordaten und der Sensordaten kann umfassen, dass diese zusammen beispielsweise in gemeinsamen oder aufeinanderfolgenden Datenpaketen über eine HDSL-Leitung übertragen werden. Die HDSL-Leitung kann Teil eines HIPERFACE DSL-Systems der Sick AG sein.

Die Motorsteuerung kann eine Anbindung an ein Netzwerk aufweisen, insbesondere eine Feldbusanbindung wie EtherCAT, EIP und dergleichen. Diese Anbindung gestattet die Übertragung bzw. Ausgabe der extrahierten Daten des Sensors an das Netzwerk und umgekehrt die Übertragung von Daten aus dem Netzwerk an den Sensor. Ferner kann die Motorsteuerung eine graphische Benutzeroberfläche aufweisen, beispielsweise einen Monitor oder einen Webserver, um die extrahierten Daten des Sensors anzeigen zu können.

Da die Sensordaten an der Erfassungsschnittstelle der Motoreinheit bzw. des Erfassungsmoduls empfangen werden, ist ein zusätzlicher bzw. separater Anschluss an ein Bus-System, mit dem auch die Motorsteuerung verbunden ist, und dessen Konfiguration nicht erforderlich. Da das Übertragungsmodul die Sensordaten und die Motordaten fusioniert und gemeinsam an die Motorsteuerung überträgt, wird die Erfassung und Auswertung der Daten in der Motorsteuerung vereinfacht, da die Motorsteuerung keine separate Erfassung und Synchronisation der Sensordaten und Motordaten auszuführen braucht. Die Sensordaten werden stattdessen sozusagen als Zusatzdaten mit den Motordaten übertragen, beispielsweise in gemeinsamen oder aufeinanderfolgenden Datenpaketen. Somit ermöglicht das Antriebssystem insgesamt eine effiziente und kostengünstige Übertragung der Sensordaten, beispielsweise für einen zusätzlichen Sensor des Systems.

Gemäß einer Ausführungsform kann die Leitung als HDSL-Leitung ausgebildet sein und mindestens zwei Leitungen umfassen, die in demselben Kabel wie Leistungsversorgungsleitungen für die Motoreinheit angeordnet sind. Die Motoreinheit kann folglich mittels eines einzigen Kabels mit der Motorsteuerung verbunden sein ("Ein-Kabel-Anschluss"), welches sowohl die Leistungsversorgung für die Motoreinheit als auch die Datenübertragung mittels HDSL bereitstellt. Die Motoreinheit und die Motorsteuerung können folglich mit geringem Aufwand aneinander angeschlossen werden.

Das Übertragungsmodul kann ferner ausgebildet sein, über die HDSL-Leitung Daten unter Verwendung einer Vielzahl von Trägerfrequenzen zu übertragen. Bei dieser Datenübertragung können die Sensordaten und/oder die Motordaten unter Verwendung eines orthogonalen Frequenzmultiplexverfahrens (OFDM) in der Vielzahl von Trägerfrequenzen codiert werden, um ein Datensignal zur Übertragung zu erhalten. Die spektrale Belegung dieses Datensignals kann auf den Frequenzbereich zwischen ungefähr 10 MHz und ungefähr 30 MHz beschränkt sein. Bei einer Obergrenze von 30 MHz kann die Verwendung teurer Komponenten und kritischer bzw. anfälliger Verarbeitungen vermieden werden, während gleichzeitig dennoch eine gute Übertragungsqualität der Leitungen erreicht wird. Eine Untergrenze von 10 MHz gestattet die Verwendung physikalischer Komponenten mit einem Hochpassverhalten, die eine Rauschunterdrückung bewirken. Die entsprechende Leitung kann in diesem Fall gleichzeitig zur Zuführung von Gleichstrom verwendet werden, beispielsweise zur Stromversorgung des Sensors.

Gemäß einer weiteren Ausführungsform kann das Übertragungsmodul einen Encoder umfassen, und die Motordaten können Daten des Encoders umfassen. Bei den Motordaten kann es sich beispielsweise um eine Drehposition und/oder eine Drehgeschwindigkeit und/oder ähnliche Parameter der antreibenden Motoreinheit handeln.

Gemäß einer weiteren Ausführungsform kann das Antriebssystem ferner eine Getriebeeinheit umfassen, die mit der Motoreinheit funktional gekoppelt ist. Der Sensor kann ein Getriebesensor sein, der mit der Getriebeeinheit in Verbindung steht und getriebespezifische Daten erfasst. Die getriebespezifischen Daten können beispielsweise Beschleunigungsdaten und/oder Schwingungsdaten umfassen. Da der Getriebesensor üblicherweise aufgrund der abweichenden Bezugsgröße seiner Daten nicht zur Datenübertragung an die Motoreinheit angeschlossen wird, sondern direkt an die Motorsteuerung, gelten die vorstehend beschriebenen Vorteile für ein System mit Motoreinheit, Getriebeeinheit und Getriebesensor in besonderem Maße.

Der Getriebesensor kann mit einem elektrischen Anschlusspunkt, insbesondere einem lösbaren Steckverbinder, der Motoreinheit in einer direkten elektrischen Verbindung stehen. Der elektrische Anschlusspunkt der Motoreinheit kann mit dem Erfassungsmodul mittels einer leitungsgebundenen Datenübertragungseinrichtung verbunden sein. Die leitungsgebundene Datenübertragungseinrichtung ist beispielsweise ein Sensorkabel, das durch die Motoreinheit hindurch verläuft. Der Getriebesensor ist folglich elektrisch lösbar an der Motoreinheit angeschlossen, sodass sich eine einfache Verkabelung ergibt, da die Getriebeeinheit direkt an der Motoreinheit befestigt sein kann und insgesamt folglich keine langen Leitungen benötigt werden. Andererseits kann der Getriebesensor somit vollständig leitungsgebunden mit dem Erfassungsmodul und dem Übertragungsmodul verbunden sein. Eine solche Leitungsverbindung kann, beispielsweise im Vergleich zu einer drahtlose Datenverbindung, weniger störungsanfällig sein.

Die Getriebeeinheit kann ferner eine elektrische Getriebeschnittstelle aufweisen, mit welcher der Getriebesensor elektrisch verbunden ist. Der Anschlusspunkt der Motoreinheit und die Getriebeschnittstelle können ferner direkt miteinander verbunden sein. Spezieller kann die Getriebeschnittstelle einen eingelassenen Kontaktstecker umfassen, während der elektrische Anschlusspunkt der Motoreinheit als eine Aufnahme ausgebildet sein kann, die mit dem eingelassenen Kontaktstecker der Getriebeeinheit in direkter Verbindung steht.

Bei einer mechanischen Verbindung zwischen der Motoreinheit und der Getriebeeinheit, die insbesondere durch Verschrauben gebildet sein kann, kann automatisch eine elektrische Verbindung zwischen dem Getriebesensor und dem elektrischen Anschlusspunkt der Motoreinheit hergestellt sein. Der elektrische Anschlusspunkt bzw. die Aufnahme der Motoreinheit kann innerhalb einer Motorendplatte angeordnet sein, insbesondere im Bereich einer Motor- bzw. Antriebswelle der Motoreinheit. Dadurch ist beispielsweise keine Vergrößerung des Motorquerschnitts erforderlich, um den Anschlusspunkt bzw. die Aufnahme für den Kontaktstecker der Getriebeschnittstelle zu installieren.

Ferner kann die Aufnahme der Motoreinheit, die zur Verbindung mit dem eingelassenen Kontaktstecker der Motoreinheit vorgesehen ist, innerhalb einer die Antriebswelle umgebenden Dichtung angeordnet sein. Wenn die Motoreinheit und die Getriebeeinheit miteinander verbunden sind, kann die Dichtung die Antriebswelle und zugleich den Kontaktstecker vor Verschmutzung schützen.

Die Motoreinheit kann ferner einen Kopplungsbereich, in welchem die Getriebeeinheit mit der Motoreinheit gekoppelt ist und in welchem der elektrische Anschlusspunkt angeordnet ist, sowie einen Datenverarbeitungsbereich aufweisen, in welchem das Erfassungsmodul und das Übertragungsmodul angeordnet sind. Der Kopplungsbereich und der Datenverarbeitungsbereich können auf entgegengesetzten Seiten der Motoreinheit angeordnet sein. Die Datenübertragungseinrichtung bzw. das Sensorkabel kann sich folglich durch das Innere der Motoreinheit zwischen dem Kopplungsbereich und dem Datenverarbeitungsbereich erstrecken. Im Fall einer Verbindung der Motoreinheit mit der Motorsteuerung mittels des vorstehend erwähnten "Ein-Kabel-Anschlusses" kann der Datenverarbeitungsbereich auch als Anschlussbereich bezeichnet werden, da auch der Anschluss einer HDSL-Leitung zur Verbindung mit der Motorsteuerung in diesem Bereich vorgesehen sein kann.

Die leitungsgebundene Datenübertragungseinrichtung bzw. das Sensorkabel kann innerhalb eines Gehäuses der Motoreinheit angeordnet sein. Falls das Gehäuse der Motoreinheit einem speziellen Dichtungskonzept unterliegt, kann die leitungsgebundene Datenübertragungseinrichtung somit in dieses Dichtungskonzept eingebunden werden. Spezieller kann die Datenübertragungseinrichtung bzw. das Sensorkabel in einer Einbuchtung eines Strangpressprofils der Motoreinheit verlegt sein und sich zumindest teilweise innerhalb eines Kanals des Gehäuses erstrecken, der im Wesentlichen parallel zu einer Längsachse der Motoreinheit verläuft.

Weiterhin betrifft der erste Aspekt ein Verfahren zum Betreiben eines Antriebssystems, bei welchem
- ein Erfassungsmodul Sensordaten eines Sensors an einer Erfassungsschnittstelle empfängt, für ein Übertragungsmodul umsetzt und über eine Ausgangsschnittstelle leitungsgebunden an das Übertragungsmodul überträgt,
- das Übertragungsmodul die umgesetzten Sensordaten an einer Eingangsschnittstelle von dem Erfassungsmodul empfängt, mit Motordaten fusioniert und die fusionierten Daten über eine Leitung an eine Motorsteuerung sendet, und
- die Motorsteuerung die Sensordaten aus den fusionierten Daten extrahiert und ausgibt.

Für das Verfahren gelten die Ausführungen zu dem Antriebssystem entsprechend. Dies gilt insbesondere hinsichtlich Vorteilen und Ausführungsformen.

Das Ausgeben der Sensordaten kann insbesondere auch ein Weiterleiten der Sensordaten zu deren Auswertung umfassen, wobei die Auswertung z.B. in einem Cloud-Computer erfolgen kann.

Gemäß einem weiteren Aspekt umfasst ein Antriebssystem eine Motoreinheit, die eine Datenerfassungseinheit aufweist, und ein Maschinenelement, das mit der Motoreinheit funktional gekoppelt ist und einen Sensor umfasst. Der Sensor steht mit einem elektrischen Anschlusspunkt der Motoreinheit in einer direkten Verbindung. Ferner ist der elektrische Anschlusspunkt der Motoreinheit mit der Datenerfassungseinheit mittels einer leitungsgebundenen Datenübertragungseinrichtung verbunden.

Der Sensor ist somit auf direkte Weise elektrisch lösbar an der Motoreinheit angeschlossen. Die leitungsgebundene Datenübertragungseinrichtung kann als ein Sensorkabel ausgebildet sein, das durch die Motoreinheit hindurch verläuft. Dadurch ergibt sich eine einfache Verkabelung zwischen dem Sensor, dem Anschlusspunkt und der Datenerfassungseinheit, insbesondere dann, wenn das Maschinenelement direkt an der Motoreinheit befestigt ist. Insgesamt sind folglich keine langen Leitungen erforderlich. Der Sensor kann somit vollständig leitungsgebunden mit dem Erfassungsmodul und dem Übertragungsmodul verbunden sein. Eine solche Leitungsverbindung ist, beispielsweise im Vergleich zu einer drahtlosen Datenverbindung, weniger störungsanfällig.

Der Anschlusspunkt und die Datenübertragungseinrichtung können auf entgegengesetzten Seiten der Motoreinheit angeordnet sein, wobei die Datenübertragungseinrichtung bzw. das Sensorkabel eine direkte und geschützte Verkabelung zwischen diesen in einem Innenraum der Motoreinheit bewirkt. Ferner kann die Datenübertragungseinrichtung über einen "Ein-Kabel-Anschluss" mit einer Motorsteuerung in Verbindung stehen. Dadurch wird die einfache und direkte Verkabelung innerhalb der Motoreinheit bei deren Verbindung mit der Motorsteuerung fortgesetzt.

Die Datenerfassungseinheit kann ferner ein Erfassungsmodul und ein Übertragungsmodul umfassen, wie diese vorstehend ausführlich beschrieben sind. Die vorstehenden Ausführungen zu dem erfindungsgemäßen Antriebssystem gemäß dem ersten Aspekt gelten folglich sinngemäß auch für das Antriebssystem gemäß dem zweiten Aspekt, insbesondere hinsichtlich der Offenbarung, der Vorteile und der bevorzugten Ausführungsformen. Insbesondere können die Merkmale sämtlicher Unteransprüche, die vorstehend beschrieben sind, auch Merkmale jeweiliger Unteransprüche für das Antriebssystem gemäß dem zweiten Aspekt sein.

Das Antriebssystem mit den Merkmalen gemäß dem zweiten Aspekt löst auch unabhängig von den Merkmalen des ersten Aspekts die erfindungsgemäße Aufgabe, nämlich ein Antriebssystem zu schaffen, bei dem Daten einer zusätzlichen Einrichtung auf effiziente Weise erfasst und ausgewertet werden können.

Gemäß einer weiteren Ausführungsform kann die Motoreinheit einen Servomotor umfassen, während das Maschinenelement ein Servogetriebe umfassen kann. Der Servomotor und das Servogetriebe können mittels einer Antriebswelle des Servomotors mechanisch gekoppelt sein.

Bei der funktionalen Kopplung der Motoreinheit und des Maschinenelements kann ferner automatisch die elektrische Verbindung zwischen dem Sensor und dem elektrischen Anschlusspunkt der Motoreinheit hergestellt sein. Eine zusätzliche Verkabelung und der damit verbundene Aufwand sind daher bei dieser Ausführungsform nicht erforderlich. Beispielsweise beim Verschrauben von Motoreinheit und Maschinenelement kann die elektrische Verbindung automatisch hergestellt werden, indem beim Verschrauben z.B. Steckverbinder von Motoreinheit und Maschinenelement automatisch miteinander gekoppelt werden, wie später noch ausgeführt.

Die Motoreinheit kann eine Motorendplatte aufweisen, während das Maschinenelement eine Adapterplatte aufweisen kann. Die funktionale Kopplung der Motoreinheit und des Maschinenelements kann durch eine mechanische Verbindung zwischen der Motorendplatte und der Adapterplatte erfolgen, insbesondere durch Verschrauben. Die funktionale Kopplung zwischen Motoreinheit und Maschinenelement kann somit auf direkte Weise mit geringem Aufwand erfolgen. Die funktionale Kopplung kann insbesondere bewirken, dass eine Antriebswelle der Motoreinheit derart mit dem Maschinenelement gekoppelt wird, dass eine Kraftübertragung von der Antriebswelle an das Maschinenelement ermöglicht wird. Alternativ oder zusätzlich kann die funktionale Kopplung auch dergestalt sein, dass in dem Maschinenelement eine Datenerfassung, z.B. von der Bewegung der Antriebswelle, mittels des Sensors ermöglicht wird. Die mechanische Verbindung kann ferner gleichzeitig eine elektrische Verbindung zwischen Motoreinheit und Maschinenelement bzw. zwischen dem Sensor und der Datenerfassungseinheit bewirken.

Die Motoreinheit kann ferner einen Kopplungsbereich, in welchem das Maschinenelement mit der Motoreinheit gekoppelt ist und der elektrische Anschlusspunkt angeordnet ist, und einen Datenverarbeitungsbereich aufweisen, in welchem die Datenerfassungseinheit angeordnet ist. Der Kopplungsbereich und der Datenverarbeitungsbereich können auf entgegengesetzten Seiten der Motoreinheit angeordnet sein. Die Datenübertragungseinrichtung bzw. das Sensorkabel kann sich folglich durch das Innere der Motoreinheit zwischen dem Kopplungsbereich und dem Datenverarbeitungsbereich erstrecken und dadurch eine direkte Verbindung ohne lange Leitungen zwischen diesen herstellen.

Gemäß einem weiteren Aspekt ist eine Motoreinheit vorgesehen, die eine Datenerfassungseinheit aufweist und mit einem Sensor verbindbar ist. Der Sensor steht mit einem elektrischen Anschlusspunkt der Motoreinheit in einer direkten Verbindung. Ferner ist der elektrische Anschlusspunkt der Motoreinheit mit der Datenerfassungseinheit mittels einer leitungsgebundenen Datenübertragungseinrichtung, beispielsweise einem Sensorkabel, verbunden.

Gemäß einem weiteren Aspekt ist ein Maschinenelement vorgesehen, das ein Verbindungselement, mit welchem das Maschinenelement mit einer Motoreinheit verbindbar ist, und eine elektrische Schnittstelle umfasst, die derart in das Verbindungselement eingebunden ist, dass bei einer mechanischen Verbindung des Maschinenelements mit der Motoreinheit gleichzeitig eine elektrische Verbindung zwischen dem Maschinenelement und der Motoreinheit hergestellt ist.

Das Maschinenelement kann folglich auf einfache und direkte Weise sowohl mechanisch als auch elektrisch mit der Motoreinheit verbunden und in ein Antriebssystem integriert werden. Eine separate Verkabelung ist nicht zwingend erforderlich.

In das Verbindungselement kann ein Sensor integriert sein. Ferner kann das Maschinenelement eine Getriebeeinheit umfassen, die ein Getriebegehäuse aufweisen kann, während das Verbindungselement als eine Adapterplatte ausgebildet sein kann, die direkt an dem Getriebegehäuse angebracht sein kann. Die elektrische Schnittstelle kann als eine Steckverbindung ausgebildet sein.

Das Verbindungselement kann eine Gegenfläche aufweisen, an der eine Dichtung der Motoreinheit anliegen kann, wenn das Maschinenelement mit der Motoreinheit verbunden ist. Mittels der Dichtung und der Gegenfläche können sowohl die elektrische Schnittstelle des Maschinenelements als auch eine entsprechende Aufnahme an der Motoreinheit beispielsweise vor Verschmutzung geschützt sein. Dies kann ebenso für weitere Elemente des Maschinenelements und der Motoreinheit gelten, sofern diese innerhalb der Dichtung und der Gegenfläche angeordnet sind.

Gemäß einer Ausführungsform kann die in das Verbindungselement eingebundene Schnittstelle die einzige elektrische Schnittstelle des Maschinenelements sein. Alternativ kann das Verbindungselement eine elektrische Zusatzschnittstelle aufweisen, über die unabhängig von dem Motorelement, mit dem das Maschinenelement verbindbar ist, eine elektrische Verbindung mit dem Maschinenelement herstellbar sein kann.

Es versteht sich, dass die Ausführungen zu dem Antriebssystem gemäß dem ersten und zweiten Aspekt auch entsprechend für das Maschinenelement gelten. Insbesondere können die Unteransprüche zu den Antriebssystemen gemäß dem ersten und zweiten Aspekt auch entsprechende Unteransprüche für das Maschinenelement sein.

Nachfolgend wird die Erfindung beispielhaft anhand einer vorteilhaften Ausführungsform unter Bezugnahme auf die beigefügten Figuren beschrieben. Es zeigen, jeweils schematisch:
- Fig. 1: ein Blockdiagramm eines erfindungsgemäßen Antriebssystems,
- Fig. 2: eine perspektivische Rückansicht eines Servomotors des Antriebssystems von Fig. 1,
- Fig. 3: eine perspektivische Seitenansicht des Servomotors von Fig. 2,
- Fig. 4: eine isometrische Ansicht einer ersten Ausführungsform eines Servogetriebes für das Antriebssystem von Fig. 1 und
- Fig. 5: eine isometrische Ansicht einer zweiten Ausführungsform des Servogetriebes für das Antriebssystem von Fig. 1.

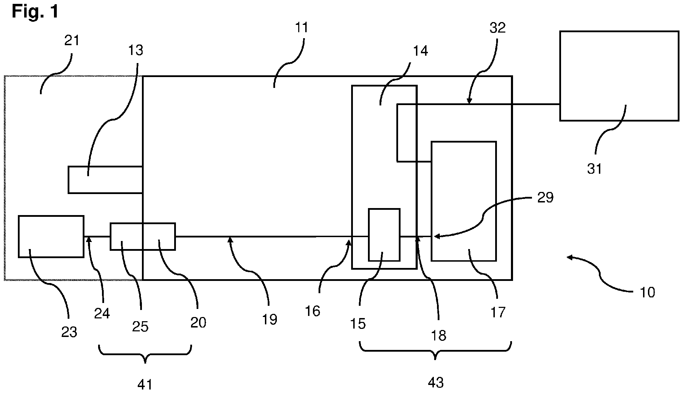

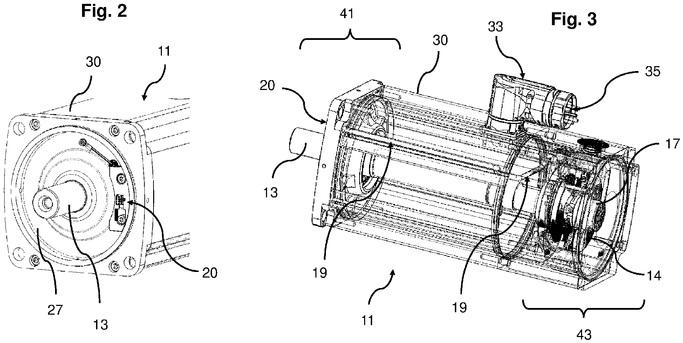

In Fig. 1 ist ein Blockdiagramm eines Antriebssystems 10 schematisch dargestellt. Das Antriebssystem 10 umfasst eine Motoreinheit 11, die als Servomotor ausgebildet ist, ein Maschinenelement 21, das als eine Getriebeeinheit 21 in der Form eines Servogetriebes ausgebildet ist, und eine Motorsteuerung 31. Der Servomotor 11 weist eine Antriebswelle 13 auf, die mit dem Servogetriebe 21 verbunden ist (vgl. auch Fig. 2 und 3).

Der Servomotor 11 umfasst ferner ein Erfassungsmodul 14, das auch als Sensorhub bezeichnet wird, da es ausgebildet ist, die Daten mehrerer Sensoren zu erfassen. Das Erfassungsmodul 14 weist eine Umsetzungseinheit 15 auf, die dafür vorgesehen ist, das Datenformat von Daten, die an einer Erfassungsschnittstelle 16 des Erfassungsmoduls 14 empfangen werden, in ein Datenformat umzusetzen, das für ein Übertragungsmodul 17 des Servomotors 11 geeignet ist.

Die von der Umsetzungseinheit 15 umgesetzten Daten werden über eine Ausgangsschnittstelle 18 des Erfassungsmoduls 14 leitungsgebunden an das Übertragungsmodul 17 übertragen.

Das Übertragungsmodul 17 ist als ein Encoder ausgebildet, der interne Motordaten des Servomotors 11 erfasst. Die internen Motordaten umfassen eine Drehposition und/oder eine Drehgeschwindigkeit des Servomotors 11.

Das Erfassungsmodul 14 ist mittels einer leitungsgebundenen Datenübertragungseinrichtung bzw. eines Sensorkabels 19 mit einem elektrischen Anschlusspunkt 20 (z.B. einem Steckverbinder) verbunden, der bezogen auf das Erfassungsmodul bzw. den Sensorhub 14 auf der entgegengesetzten Seite des Servomotors 11 angeordnet ist, wie dies am besten in Fig. 3 zu erkennen ist. Die leitungsgebundene Datenübertragungseinrichtung bzw. das Sensorkabel 16 erstreckt sich somit im Innenraum des Servomotors 11 nahezu über dessen vollständige Länge in Längsrichtung (vgl. Fig. 3).

Die leitungsgebundene Datenübertragungseinrichtung bzw. das Sensorkabel 19 ist innerhalb eines Gehäuses 30 (vgl. Fig. 2 und 3) des Servomotors 11 angeordnet. Das Gehäuse des Servomotors 11 unterliegt einem speziellen Dichtungskonzept, in das die Datenübertragungseinrichtung bzw. das Sensorkabel 19 somit eingebunden wird. Spezieller ist die Datenübertragungseinrichtung bzw. das Sensorkabel 19 größtenteils in einer Einbuchtung eines Strangpressprofils im Gehäuse 30 des Servomotors 11 verlegt. Das Sensorkabel 19 erstreckt sich somit zumindest teilweise innerhalb eines Kanals des Gehäuses 30, der im Wesentlichen parallel zu einer Längsachse des Servomotors 11 verläuft.

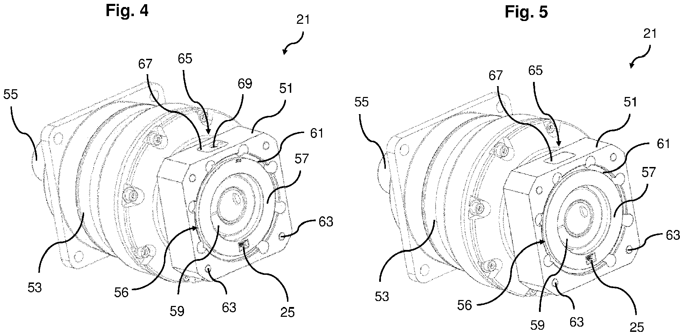

Das Servogetriebe 21 weist einen Getriebesensor 23 auf, der über eine Leitungsverbindung 24 mit einer Getriebeschnittstelle 25 verbunden ist, die als Kontaktstecker ausgebildet ist. Der Kontaktstecker 25 ist in einen Steckerträger 57 an einer Stirnseite des Servogetriebes 21 eingelassen, wie dies nachstehend im Zusammenhang mit Fig. 4 näher erläutert ist. Wenn der Servomotor 11 mit dem Servogetriebe 21 mechanisch verbunden ist, beispielsweise durch Verschrauben, ist der Kontaktstecker 25 automatisch mit dem Anschlusspunkt 20 des Servomotors 11 verbunden. Wie in Fig. 2 zu erkennen ist, ist der Anschlusspunkt 20 als Aufnahme für den Kontaktstecker 25 des Servogetriebes 21 ausgebildet. Der elektrische Anschlusspunkt bzw. die Aufnahme 20 für den Kontaktstecker 25 ist in einer Motorendplatte 27 (z.B. einem wellenseitigem Lagerschild) des Servomotors 11 integriert. Da sich der elektrische Anschlusspunkt 20 innerhalb der Motorendplatte 27 befindet, ist für dessen Installation keine Vergrößerung des bestehenden Motorquerschnitts erforderlich. Wenn der Servomotor 11 mit dem Servogetriebe 21 verbunden ist, sind die Motorendplatte 27 und die Antriebswelle 13 mit einer Dichtung (nicht dargestellt) umgeben, um die Antriebswelle und den elektrischen Anschlusspunkt bzw. die Aufnahme 20 vor Verschmutzung zu schützen.

Fig. 4 zeigt eine isometrische Ansicht des Servogetriebes 21 für das Antriebssystem 10 von Fig. 1. Das Servogetriebe 21 umfasst eine Adapterplatte 51, über die das Servogetriebe 21 mit dem Servomotor 11 verbunden werden kann, ein Getriebegehäuse 53 und eine Abtriebswelle 55. Die Abtriebswelle 55 ist zur Verbindung einer oder mehreren weiteren Einrichtungen vorgesehen, die mit dem Antriebssystem 10 angetrieben werden sollen. Das Getriebegehäuse 53 befindet sich zwischen der Adapterplatte 51 und der Abtriebswelle 55. Die Verschraubungen zwischen dem Getriebegehäuse 53 und der Adapterplatte 51 sind in Fig. 4 nicht dargestellt.

Die Adapterplatte 51 weist eine axiale Durchgangsöffnung 56 auf. In der axialen Durchgangsöffnung 56 ist ein kreisscheibenförmiger Steckerträger 57 angeordnet, der bezüglich der Adapterplatte 51 zentriert und an dieser befestigt ist. In den Steckerträger 57 ist der Kontaktstecker 25 eingelassen, der zur elektrischen Verbindung des Getriebesensor 23 mit dem elektrischen Anschlusspunkt bzw. der Aufnahme 20 (vgl. Fig. 2 und 3) des Servomotors 11 vorgesehen ist.

In der axiale Durchgangsöffnung 56 der Adapterplatte 51 ist ferner eine Steckhülse 59 innerhalb des Steckerträgers 57 aufgenommen. Die Steckhülse 59 weist eine Öffnung in Richtung des Servomotors 11 auf, welche die Antriebswelle 13 des Servomotors 11 aufnimmt, wenn das Servogetriebe 21 mit dem Servomotor 11 verbunden ist.

Zwischen der Adapterplatte 51 und dem Steckerträger 57 ist eine Aussparung 61 vorgesehen, die als Gegenfläche für die vorstehend im Zusammenhang mit Fig. 2 beschriebene Dichtung dient, welche die Motorendplatte 27 und die Antriebswelle 13 des Servomotors 11 umgibt. Die Dichtung schützt somit durch die Verbindung mit der Aussparung 61 bzw. den Eingriff in diese sowohl die Antriebswelle 13 und die Motorendplatte 27 des Servomotors 11 als auch den in dem Steckerträger 57 eingelassenen Kontaktstecker 25 vor Verschmutzung.

Bei Ausführung des Servogetriebes 21 als Koaxialgetriebe ist die Antriebswelle 55 koaxial zu der Steckhülse 59 und zu der Antriebswelle 13 des Servomotors 11 ausgerichtet. Die Adapterplatte 51 weist weiterhin Bohrungen 63 auf, die in axialer Richtung ausgeführt sind. Die Bohrungen 63 sind zum Verbinden der Adapterplatte 51 mit dem Gehäuse 30 des Servomotors 11 mittels Verschraubung vorgesehen. Die in Fig. 4 dargestellte Adapterplatte 51 weist vier Bohrungen 63 auf, von denen jedoch nur die beiden unteren Bohrungen bezeichnet sind.

Die Adapterplatte 51 weist ferner eine Ausnehmung 65 auf, die zur Aufnahme eines Sensorikblocks 67 vorgesehen ist. Die Ausnehmung 65 weist einen viereckigen Querschnitt mit ausgerundeten Ecken auf. Die Kanten des viereckigen Querschnitts sind parallel zu Seitenkanten der Adapterplatte 51 ausgerichtet. In Fig. 4 ist der Sensorikblock 67 bereits in der Ausnehmung 65 aufgenommen.

Der Sensorikblock 67 umfasst den vorstehend beschriebenen Getriebesensor 23. Der Kontaktstecker 25 und der Sensorikblock 67 sind über eine nicht dargestellte Kabelverbindung verbunden. Der Sensorikblock umfasst ferner eine den Getriebesensor 23 umhüllende Kunststoffhülle, die durch Vergießen des Getriebesensors 23 in Kunststoff oder durch Umspritzen des Getriebesensors 23 mit Kunststoff hergestellt ist.

Bei der in Fig. 4 dargestellten ersten Ausführungsform des Servogetriebes 21 umfasst der Sensorikblock 67 einen Anschluss 69, der als zusätzliche elektrische Verbindung des Getriebesensors 23 vorgesehen ist und über ein Loch in der Kunststoffhülle des Sensorikblocks 67 von außen zugänglich ist. An dem Anschluss 69 kann folglich ein nicht dargestelltes Kabel angeschlossen werden. Die Ausnehmung 65 ist ferner zu der axialen Durchgangsöffnung 56 der Adapterplatte 51 hin geöffnet. Die Ausnehmung 65 ist in axialer Richtung, wobei "axial" der Richtung der Durchgangsöffnung 56 entspricht, durch Wände begrenzt, welche aus dem Material der Adapterplatte 51 bestehen.

Die in Fig. 5 dargestellte zweite Ausführungsform des Servogetriebes 21 unterscheidet sich von der in Fig. 4 dargestellten ersten Ausführungsform lediglich dadurch, dass der Sensorikblock 67 den zusätzlichen Anschluss 69 und das entsprechende Loch an der Oberseite nicht aufweist. Ansonsten ist die zweite Ausführungsform des Servogetriebes 21 von Fig. 5 mit der ersten Ausführungsform von Fig. 4 identisch, sodass die vorstehende Beschreibung der Fig. 4 abgesehen vom Anschluss 69 auch für die in Fig. 5 gezeigte zweite Ausführungsform gültig ist.

Messdaten bzw. Sensordaten, die von dem Getriebesensor 23 (z.B. in dem Sensorikblock 67) erzeugt werden, werden über die Leitungsverbindung 24 (siehe Fig. 1), den Kontaktstecker 25 und die Aufnahme bzw. den elektrischen Anschlusspunkt 20 sowie über das Sensorkabel 19 zu der Erfassungsschnittstelle 16 des Erfassungsmoduls bzw. Sensorhubs 14 übertragen. Für diese Übertragung wird das I²C-Protokoll (I²C von engl.: inter-integrated circuit) verwendet. Die Daten des Getriebesensors 23, die an der Erfassungsschnittstelle 16 empfangen werden, werden in der Umsetzungseinheit 15 in das UART-Protokoll umgesetzt (UART von engl.: universal asynchroneous receiver transmitter), damit das Datenformat für das Übertragungsmodul bzw. den Encoder 17 geeignet ist.

Die internen Motordaten des Servomotors 11, die mittels des Encoders 17 erfasst und die Drehposition und/oder die Drehgeschwindigkeit des Servomotors 11 umfassen, werden ebenfalls gemäß dem UART-Protokoll erfasst. Der Encoder 17 fusioniert ferner die Motordaten mit den umgesetzten Sensordaten, die an einer Eingangsschnittstelle 29 des Übertragungsmoduls bzw. Encoders 17 empfangen werden. Anschließend werden die fusionierten Daten von dem UART-Protokoll auf das HDSL-Protokoll umgesetzt, um die fusionierten Daten über eine HDSL-Leitung 32 an die Motorsteuerung 31 zu übertragen. Der Begriff HDSL steht für "HIPERFACE DSL", und die HDSL-Leitung 32 bezeichnet eine DSL-artige Leitung des HIPERFACE-Systems der Sick AG.

Das Fusionieren der Motordaten und der Sensordaten umfasst, dass diese zusammen in gemeinsamen oder aufeinanderfolgenden Datenpaketen über die HDSL-Leitung 32 übertragen werden. Die HDSL-Leitung 32 ist Teil eines HIPERFACE DSL-Systems der Sick AG.

Das Übertragungsmodul bzw. der Encoder 17 ist ferner ausgebildet, über die HDSL-Leitung 32 Daten unter Verwendung einer Vielzahl von Trägerfrequenzen zu übertragen. Bei dieser Datenübertragung werden die Sensordaten unter Verwendung eines orthogonalen Frequenzmultiplexverfahrens (OFDM) in der Vielzahl von Trägerfrequenzen codiert, um ein Sensorsignal zur Übertragung zu erhalten. Die spektrale Belegung dieses Sensorsignals ist auf den Frequenzbereich zwischen ungefähr 10 MHz und ungefähr 30 MHz beschränkt. Bei einer Obergrenze von 30 MHz wird die Verwendung teurer Komponenten und kritischer bzw. anfälliger Verarbeitungen vermieden, während gleichzeitig dennoch eine gute Übertragungsqualität der Leitungen erreicht wird. Eine Untergrenze von 10 MHz gestattet die Verwendung physikalischer Komponenten mit einem Hochpassverhalten, die eine Rauschunterdrückung bewirken. Die entsprechende Leitung kann in diesem Fall gleichzeitig zur Zuführung von Gleichstrom verwendet werden zu dem Servomotor 11 und über diesen zu dem Getriebesensor 23 verwendet werden.

Die HDSL-Leitung 32 umfasst zwei Leitungen, die in demselben Kabel wie Leistungsversorgungsleitungen für den Servomotor 11 angeordnet sind. Der Servomotor 11 verfügt daher über einen Ein-Kabel-Anschluss 35 (vgl. Fig. 3), der in einem Anschlusselement 33 des Servomotors 11 angeordnet ist.

Wie in Fig. 1 dargestellt ist, erfolgt die Datenübertragung von dem Encoder bzw. dem Übertragungsmodul zwar über das Erfassungsmodul 14 zur Motorsteuerung 31. Das Erfassungsmodul 14 beeinflusst die Daten jedoch nicht weiter, die zuvor in dem Encoder 17 fusioniert wurden. Die Motorsteuerung 31 empfängt die fusionierten Daten über die HDSL-Leitung 32 und ist ausgebildet, die Daten des Getriebesensors 23 aus den fusionierten Daten zu extrahieren und auszugeben.

Wie in Fig. 1 und Fig. 3 zu erkennen ist, umfasst der Servomotor 11 einen Kopplungsbereich 41, in welchem die mechanische und elektrische Kopplung zwischen dem Servomotor 11 und dem Servogetriebe 21 erfolgt. Außerdem umfasst der Servomotor 11 einen Datenverarbeitungsbereich 43, in welchem das Erfassungsmodul bzw. der Sensorhub 14 und das Übertragungsmodul bzw. der Encoder 17 angeordnet sind und in welchem die Umsetzung der Daten sowie die Fusion der Motordaten mit den Sensordaten erfolgt. Sobald eine mechanische Verbindung zwischen dem Servomotor 11 und dem Servogetriebe 21 über die Antriebswelle 13 im Kopplungsbereich 41 hergestellt ist, liegt automatisch eine elektrische Verbindung zwischen dem Getriebesensor 23 und dem elektrischen Anschlusspunkt bzw. der Aufnahme 20 des Servomotors 11 und somit mit dessen Datenverarbeitungsbereich 43 vor.

Aufgrund des Sensorkabels 19 und der entsprechenden leitungsgebundenen Datenübertragung ist folglich keine separate Verdrahtung des Getriebesensors 23 erforderlich. Darüber hinaus werden im Datenverarbeitungsbereich 43 die vorhandenen Möglichkeiten zur Datenerfassung und Umsetzung mittels des Erfassungsmoduls 14 und mittels des Encoders bzw. Übertragungsmoduls 17 auch für die Sensordaten des Getriebesensors 23 verwendet, sodass keine separate Umsetzung und Verarbeitung der Sensordaten in der Motorsteuerung 31 zu erfolgen braucht. Somit gestattet das Antriebssystem 10 eine einfache und effiziente Einbindung des Getriebesensors 23 in die elektrische und elektronische Struktur des Servomotors 11.

### Bezugszeichenliste

- 10: Antriebssystem
- 11: Motoreinheit bzw. Servomotor
- 13: Antriebswelle
- 14: Erfassungsmodul bzw. Sensorhub
- 15: Umsetzungseinheit
- 16: Erfassungsschnittstelle
- 17: Übertragungsmodul bzw. Encoder
- 18: Ausgangsschnittstelle
- 19: leitungsgebundene Datenübertragungseinrichtung bzw. Sensorkabel
- 20: elektrischer Anschlusspunkt bzw. Aufnahme
- 21: Maschinenelement, Getriebeeinheit bzw. Servogetriebe
- 23: Getriebesensor
- 24: Leitung
- 25: Getriebeschnittstelle bzw. Kontaktstecker
- 27: Motorendplatte
- 29: Eingangsschnittstelle
- 30: Gehäuse des Servomotors
- 31: Motorsteuerung
- 32: HDSL-Leitung
- 33: Anschlusselement
- 35: Ein-Kabel-Anschluss
- 41: Kopplungsbereich
- 43: Datenverarbeitungsbereich
- 51: Adapterplatte
- 53: Getriebegehäuse
- 55: Abtriebswelle
- 56: axiale Durchgangsöffnung
- 57: Steckerträger
- 59: Steckhülse
- 61: Aussparung
- 63: Bohrung
- 65: Ausnehmung
- 67: Sensorikblock
- 69: Anschluss

## Patentansprüche

1. Antriebssystem (10), umfassend:
eine Motoreinheit (11), die ein Erfassungsmodul (14) und ein Übertragungsmodul (17) aufweist,
einen Sensor (23) und
eine Motorsteuerung (31),
wobei das Erfassungsmodul (14) ausgebildet ist, Sensordaten des Sensors (23) an einer Erfassungsschnittstelle (16) zu empfangen, für das Übertragungsmodul (17) umzusetzen und über eine Ausgangsschnittstelle (18) leitungsgebunden an das Übertragungsmodul (17) zu übertragen,
wobei das Übertragungsmodul (17) ausgebildet ist, die umgesetzten Sensordaten an einer Eingangsschnittstelle (29) von dem Erfassungsmodul (14) zu empfangen, mit in der Motoreinheit (11) ermittelten Motordaten zu fusionieren und die fusionierten Daten über eine Leitung (32) an die Motorsteuerung (31) zu senden, und
wobei die Motorsteuerung (31) ausgebildet ist, die Daten des Sensors (23) aus den fusionierten Daten zu extrahieren und auszugeben.

2. Antriebssystem (10) nach Anspruch 1,
**dadurch gekennzeichnet, dass**
die Leitung (32) als HDSL-Leitung ausgebildet ist und mindestens zwei Leitungen umfasst, die in demselben Kabel wie Leistungsversorgungsleitungen für die Motoreinheit (11) angeordnet sind,
Wobei das Übertragungsmodul (17) bevorzugt ausgebildet ist, über die HDSL-Leitung (32) Daten unter Verwendung einer Vielzahl von Trägerfrequenzen zu übertragen.

3. Antriebssystem (10) nach einem der vorstehenden Ansprüche,
**dadurch gekennzeichnet, dass**
das Übertragungsmodul (17) einen Encoder umfasst und die Motordaten Daten des Encoders umfassen.

4. Antriebssystem (10) nach einem der vorstehenden Ansprüche,
**dadurch gekennzeichnet, dass**
das Antriebssystem (10) ferner eine Getriebeeinheit (21) umfasst, die mit der Motoreinheit (11) funktional gekoppelt ist, und
der Sensor (23) ein Getriebesensor ist, der mit der Getriebeeinheit (21) in Verbindung steht und getriebespezifische Daten erfasst.

5. Antriebssystem (10) nach Anspruch 4,
**dadurch gekennzeichnet, dass**
der Getriebesensor (23) mit einem elektrischen Anschlusspunkt (20), insbesondere einem lösbaren Steckverbinder, der Motoreinheit (11) in einer direkten elektrischen Verbindung steht, und
der elektrische Anschlusspunkt (20) der Motoreinheit (11) mit dem Erfassungsmodul (14) mittels einer leitungsgebundenen Datenübertragungseinrichtung (19) verbunden ist,
wobei bei einer mechanischen Verbindung zwischen der Motoreinheit (11) und der Getriebeeinheit (21), die insbesondere durch Verschrauben gebildet ist, bevorzugt automatisch eine elektrische Verbindung zwischen dem Getriebesensor (23) und dem elektrischen Anschlusspunkt (20) der Motoreinheit (11) hergestellt ist.

6. Antriebssystem (10) nach Anspruch 5,
**dadurch gekennzeichnet, dass**
die Motoreinheit (11) einen Kopplungsbereich (41), in welchem die Getriebeeinheit (21) mit der Motoreinheit (11) gekoppelt ist und der elektrische Anschlusspunkt (20) angeordnet ist, und einen Datenverarbeitungsbereich (43) aufweist, in welchem das Erfassungsmodul (14) und das Übertragungsmodul (17) angeordnet sind, und
der Kopplungsbereich (41) und der Datenverarbeitungsbereich (43) auf entgegengesetzten Seiten der Motoreinheit (11) angeordnet sind.

7. Antriebssystem (10) nach einem der Ansprüche 5 bis 6,
**dadurch gekennzeichnet, dass**
die leitungsgebundene Datenübertragungseinrichtung (19) innerhalb eines Gehäuses (30) der Motoreinheit (11) angeordnet ist.

8. Antriebssystem (10), umfassend:
eine Motoreinheit (11), die eine Datenerfassungseinheit (14, 17) aufweist, und
ein Maschinenelement (21), das mit der Motoreinheit (11) funktional gekoppelt ist und einen Sensor (23) umfasst,
wobei der Sensor (23) mit einem elektrischen Anschlusspunkt (20) der Motoreinheit (11) in einer direkten Verbindung steht, und
wobei der elektrische Anschlusspunkt (20) der Motoreinheit (11) mit der Datenerfassungseinheit (14, 17) mittels einer leitungsgebundenen Datenübertragungseinrichtung (19) verbunden ist,
wobei bei der funktionalen Kopplung der Motoreinheit (11) und des Maschinenelements (21) bevorzugt automatisch die elektrische Verbindung zwischen dem Sensor (23) und dem elektrischen Anschlusspunkt (20) der Motoreinheit (11) hergestellt ist.

9. Antriebssystem (10) nach Anspruch 8,
**dadurch gekennzeichnet, dass**
die Motoreinheit (11) eine Motorendplatte (27) und das Maschinenelement (21) eine Adapterplatte (51) aufweist und
die funktionale Kopplung der Motoreinheit (11) und des Maschinenelements (21) durch eine mechanische Verbindung zwischen der Motorendplatte (27) und der Adapterplatte (51) erfolgt, insbesondere durch Verschrauben.

10. Antriebssystem (10) nach einem der Ansprüche 8 bis 9,
**dadurch gekennzeichnet, dass**
die Motoreinheit (11) einen Kopplungsbereich (41), in welchem das Maschinenelement (21) mit der Motoreinheit (11) gekoppelt ist und der elektrische Anschlusspunkt (20) angeordnet ist, und einen Datenverarbeitungsbereich (43) aufweist, in welchem die Datenerfassungseinheit (14, 17) angeordnet ist, und
der Kopplungsbereich (41) und der Datenverarbeitungsbereich (43) auf entgegengesetzten Seiten der Motoreinheit (11) angeordnet sind.

11. Maschinenelement (21), umfassend:
ein Verbindungselement (51), mit welchem das Maschinenelement (21) mit einer Motoreinheit (11) verbindbar ist, und
eine elektrische Schnittstelle (25), die derart in das Verbindungselement (51) eingebunden ist, dass bei einer mechanischen Verbindung des Maschinenelements (21) mit der Motoreinheit (11) gleichzeitig eine elektrische Verbindung zwischen dem Maschinenelement (21) und der Motoreinheit (11) hergestellt ist,
wobei das Maschinenelement (21) bevorzugt durch einen Sensor (23), der in das Verbindungselement (51) integriert ist, gekennzeichnet ist.

12. Maschinenelement (21) nach Anspruch 11,
**dadurch gekennzeichnet, dass**
das Maschinenelement (21) eine Getriebeeinheit umfasst, die ein Getriebegehäuse (53) aufweist,
das Verbindungselement (51) als eine Adapterplatte (51) ausgebildet ist, die direkt an dem Getriebegehäuse (53) angebracht ist, und
die elektrische Schnittstelle (25) als eine Steckverbindung ausgebildet ist.

13. Maschinenelement (21) nach einem der Ansprüche 11 bis 12,
**dadurch gekennzeichnet, dass**
das Verbindungselement (51) eine Gegenfläche aufweist, an der eine Dichtung der Motoreinheit (11) anliegt, wenn das Maschinenelement (21) mit der Motoreinheit (11) verbunden ist, und/oder
die in das Verbindungselement (51) eingebundene Schnittstelle (25) die einzige elektrische Schnittstelle des Maschinenelements (21) ist.

14. Maschinenelement (21) nach einem der Ansprüche 11 bis 13,
**dadurch gekennzeichnet, dass**
das Verbindungselement (51) eine elektrische Zusatzschnittstelle (69) aufweist, über die unabhängig von dem Motorelement (11), mit dem das Maschinenelement (21) verbindbar ist, eine elektrische Verbindung mit dem Maschinenelement (21) herstellbar ist.

15. Verfahren zum Betreiben eines Antriebssystems (10), bei welchem:
ein Erfassungsmodul (14) Sensordaten eines Sensors (23) an einer Erfassungsschnittstelle (16) empfängt, für ein Übertragungsmodul (17) umsetzt und über eine Ausgangsschnittstelle (18) leitungsgebunden an das Übertragungsmodul (17) überträgt,
das Übertragungsmodul (17) die umgesetzten Sensordaten an einer Eingangsschnittstelle (29) von dem Erfassungsmodul (14) empfängt, mit Motordaten fusioniert und die fusionierten Daten über eine Leitung (32) an eine Motorsteuerung (31) sendet, und
die Motorsteuerung (31) die Daten des Sensors (23) aus den fusionierten Daten extrahiert und ausgibt.
